# EUROPÄISCHE PATENTANMELDUNG

(11) **EP 2 502 726 A2**
(43) Veröffentlichungstag der Anmeldung: **26.09.2012**
(21) Anmeldenummer: 12158837.0
(22) Anmeldetag: 09.03.2012
(51) Int. Cl.: B29C 65/52, B29C 65/14, B29C 65/78, E06B 3/96

(54) **Verfahren und Vorrichtung zum Verkleben von Profilelementen**

(30) Priorität: 22.03.2011 DE 102011001459
(71) Anmelder: MHF GmbH, 33397 Rietberg (DE)
(72) Erfinder: Authmann, Andreas, 33803 Steinhagen (DE)
(74) Vertreter: TER MEER - STEINMEISTER & PARTNER GbR

(57) **Zusammenfassung**

Vorrichtung zum Verkleben von Profilelementen mit Hilfe eines thermisch aktivierbaren Klebers, mit einer Presse, in die die Profilelemente (10) derart einlegbar sind, dass ihre Klebflächen (12) einander in Abstand gegenüberliegen, einer Heizeinrichtung (30), die so an der Presse angeordnet ist, dass sie in den Zwischenraum zwischen den Klebflächen (12) einfahren kann, um den Kleber zu aktivieren, und einem Antrieb (24), mit dem Backen (18) der Presse derart gegeneinander bewegbar sind, dass sie die Klebflächen (12) gegeneinanderpressen, dadurch gekennzeichnet, dass die Heizeinrichtung (30) eine Strahlungsquelle (38) zum berührungslosen Erhitzen des Klebers aufweist und dass an der Presse ein Infrarotsensor (46) zum berührungslosen Messen der Temperatur der Klebflächen (12) angeordnet ist.

## Beschreibung

Die Erfindung betrifft ein Verfahren und eine Vorrichtung zum Verkleben von Profilelementen mit Hilfe eines thermisch aktivierbaren Klebers, mit einer Presse, in die die Profilelemente derart einlegbar sind, dass ihre Klebflächen einander in Abstand gegenüberliegen, einer Heizeinrichtung, die so an der Presse angeordnet ist, dass sie in den Zwischenraum zwischen den Klebflächen einfahren kann, um den Kleber zu aktivieren, und einem Antrieb, mit dem Backen der Presse derart gegeneinander bewegbar sind, dass sie die Klebflächen gegeneinander pressen.

Die Vorrichtung dient insbesondere zum Verkleben von Hohlprofilen aus Kunststoff für Fensterrahmen, Türrahmen und dergleichen.

Bisher werden die auf Gehrung geschnittenen Profile zumeist an den Ecken miteinander verschweißt. Dazu werden die Profilelemente so in eine Presse eingelegt, dass ihre Gehrungsflächen einander zugewandt sind, mit Hilfe von Schweißschwertern werden die Gehrungsflächen erhitzt, und anschließend werden die erhitzten Gehrungsflächen mit Hilfe der Presse gegeneinander gedrückt, so dass die Profile miteinander verschweißt werden.

Aus EP 1 651 735 B1 ist ein Verfahren bekannt, bei dem solche Hohlprofile nicht miteinander verschweißt, sondern mit Hilfe eines thermisch aktivierbaren Klebers, beispielsweise eines PU-Klebers, miteinander verklebt werden. Dieses Verfahren erlaubt auch die Herstellung von Profilrahmen aus faserverstärkten Kunststoffen oder Kunststoffen mit mineralischen Füllstoffen, die sich nur schwer schweißen lassen.

Aufgabe der Erfindung ist es, ein Verfahren und eine Vorrichtung anzugeben, mit denen sich die Profilelemente einfach und zuverlässig miteinander verkleben lassen. Diese Aufgabe wird erfindungsgemäß durch ein Verfahren der eingangs genannten Art gelöst, bei dem der Kleber mittels Strahlung aus einer Strahlungsquelle der Heizeinrichtung berührungslos erhitzt wird und die Temperatur der Klebflächen berührungslos mit einem Infrarotsensor gemessen wird.

Bei der erfindungsgemäßen Vorrichtung weist die Heizeinrichtung eine Strahlungsquelle zum berührungslosen Erhitzen des Klebers auf, und an der Presse ist ein Infrarotsensor zum berührungslosen Messen der Temperatur der Klebflächen angeordnet.

Die Strahlungsquelle ermöglicht es, die mit dem Kleber beschichteten Klebflächen der Profilelemente durch Wärmestrahlung auf eine Temperatur zu erhitzen, die eine thermische Aktivierung des Klebers bewirkt. Da die Klebflächen dabei nicht von der Heizeinrichtung berührt werden, kann während des Heizvorgangs die Temperatur der Klebflächen und damit des Klebers mit Hilfe des auf eine der Klebflächen gerichteten Infrarotsensors überwacht werden.

Auf diese Weise lässt sich sicherstellen, dass der Kleber unabhängig von seinem Anfangszustand reproduzierbar auf die für die Aktivierung erforderliche Solltemperatur erhitzt wird und diese Solltemperatur auch nicht unzulässig überschritten wird. Dadurch lässt sich eine gleichbleibend hohe Qualität der Klebungen gewährleisten.

Vorteilhafte Ausgestaltungen und Weiterbildungen der Erfindung sind in den Unteransprüchen angegeben.

Im folgenden wird ein Ausführungsbeispiel anhand der Zeichnung näher erläutert.

Es zeigen:
- Fig. 1: einen Grundriss eines von vier Eckelementen einer Vorrichtung zum Verkleben von auf Gehrung geschnittenen Hohlprofilen;
- Fig. 2: eine Seitenansicht des Eckelements nach Fig. 1;
- Fig. 3 und 4: einen Grundriss und eine Seitenansicht analog zu Fig. 1 und 2, jedoch für einen anderen Betriebszustand der Vorrichtung;
- Fig. 5: einen vereinfachten Grundriss des Eckelements während eines Klebvorgangs; und
- Fig. 6: einen vereinfachten Grundriss der kompletten Vorrichtung.

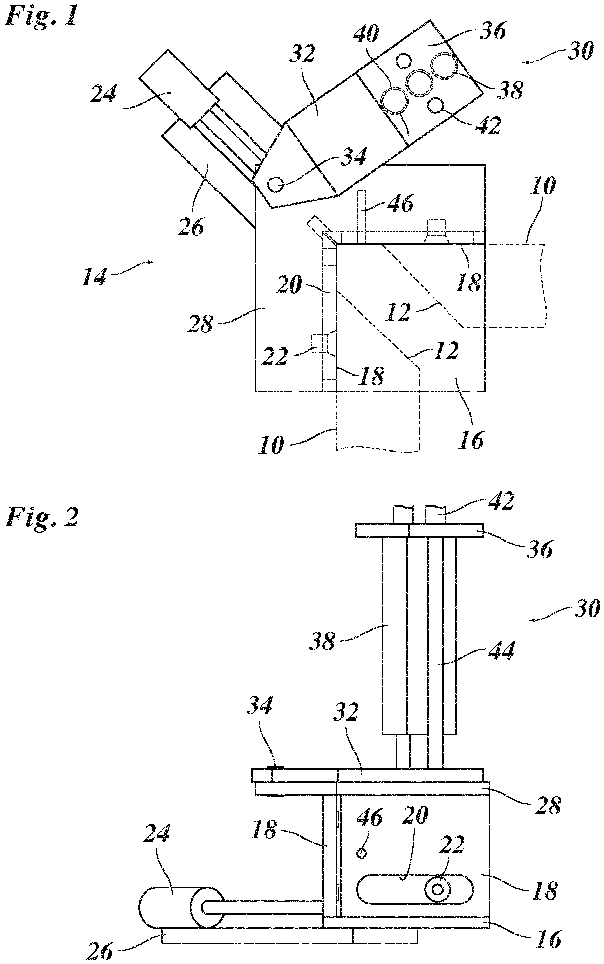

In Fig. 1 sind strichpunktiert die Enden von zwei auf Gehrung geschnittenen Profilelementen 10 gezeigt, beispielsweise Kunststoff-Hohlprofilen für einen Fensterrahmen, die an Klebflächen 12 (den Gehrungsflächen) miteinander verklebt werden sollen. Eine Vorrichtung, mit der dieser Klebvorgang ausgeführt wird, weist vier im wesentlichen gleich aufgebaute Eckelemente 14 auf, von denen eines in Fig. 1 im Grundriss gezeigt ist.

Die Enden der Profilelemente 10 liegen auf einer Stützplatte 16 auf und liegen mit ihren nach außen weisenden Flächen an zwei rechtwinklig zueinander angeordneten Backen 18 an. Jede der beiden Backen 18 hat ein längliches Fenster, das einen beweglich gelagerten und elastisch abgestützten Saugkopf 22 aufnimmt, mit dem die Profilelemente gegen die Backen angesaugt werden können.

Die Stützplatte 16 und die Backen 18 sind mit Hilfe eines Antriebs 24 gemeinsam in einer diagonal zu den Backen 18 verlaufenden Richtung auf einer Führung 26 verschiebbar.

Auf den oberen Rändern der Backen 18 ist eine Grundplatte 28 angebracht, auf der eine Heizeinrichtung 30 schwenkbar montiert ist. Die Heizeinrichtung 30 weist einen waagerecht orientierten Arm 32 auf, der relativ zu der Grundplatte 28 um eine vertikale Achse 34 schwenkbar ist. Ein Sockel 36 ist höhenverstellbar auf dem freien Ende des Armes 32 angeordnet und trägt mehrere (beispielsweise drei) Infrarotlampen 38, die sich von der Unterseite des Sockels 36 aus nach unten erstrecken. Die Infrarotlampen 38 sind in einer in Längsrichtung des Armes 32 verlaufenden Ebene angeordnet und jeweils auf eine in dem Arm 32 gebildete Öffnung 40 zentriert, so dass sie durch die Öffnungen hindurchtreten können, wenn der Sockel 36 abgesenkt wird. Zur Höhenverstellung des Sockels 36 sind im gezeigten Beispiel Pneumatikzylinder 42 vorgesehen, deren Zylinderkörper auf dem Sockel 36 befestigt sind, und deren Kolbenstangen 44 (Fig. 2) parallel zu den Infrarotlampen 38 durch den Sockel 36 hindurch nach unten ragen und am freien Ende an dem Arm 32 befestigt sind.

Wie in Fig. 1 und 2 zu erkennen ist, ist in mindestens einer der beiden Backen 18 ein Infrarotsensor 46 angeordnet. Die Position dieses Infrarotsensors 46 ist so gewählt, dass er auf die Klebfläche 12 eines der Profilelemente 10 gerichtet ist, so dass er die von dieser Klebfläche emittierte Wärmestrahlung empfangen und auf diese Weise die Temperatur der Klebfläche messen kann.

In dem in Fig. 1 und 2 gezeigten Zustand ist die Heizeinrichtung 30 von der Stützplatte 16 weg geschwenkt, so dass die Profilelemente 10 bequem eingelegt werden können. Die Profilelemente 10 werden dabei so positioniert, dass ihre Gehrungsflächen, auf die bereits ein thermisch aktivierbarer Kleber aufgetragen ist, einander in Abstand gegenüber liegen. Der Abstand zischen den Klebfläche 12 ist größer als der Durchmesser der Infrarotlampen 38.

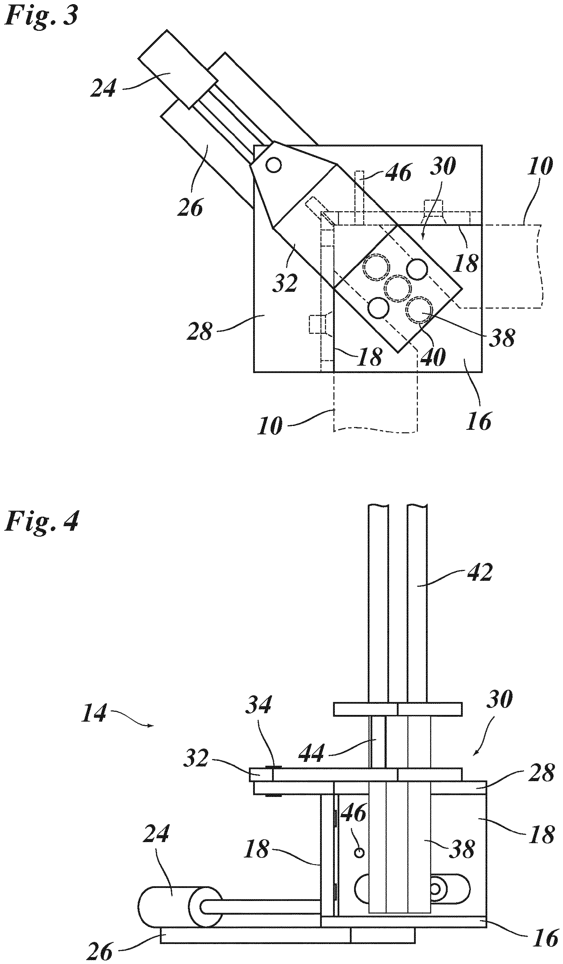

Um den Kleber zu aktivieren, wird dann die Heizeinrichtung 30 in die in Fig. 3 und 4 gezeigte Position geschwenkt, in der die Infrarotlampen 38 über der Diagonalen der Stützplatte 16 liegen. Anschließend werden die Kolbenstangen 44 der Pneumatikzylinder 42 eingezogen, so dass sich der Sockel 36 absenkt und die Infrarotlampen 38 durch die Öffnungen 40 des Armes 32 hindurch in den Zwischenraum zwischen den Klebflächen 12 der Profilelemente 10 einfahren.

Während die Profilelemente 10 durch die Saugköpfe 22 in Position gehalten werden, werden die Infrarotlampen 38 eingeschaltet, um den Kleber zu aktivieren. Der Infrarotsensor 46 ist so angeordnet, dass er an den Infrarotlampen 38 vorbei auf die Klebfläche 12 des gegenüberliegenden Profilelements "schauen" kann. Seine Optik ist so gestaltet, dass sie das lichtempfindliche Element des Sensors gegenüber dem direkten Strahlungseinfall von den Infrarotlampen 38 abschirmt, so dass nur die Strahlung empfangen wird, die von der erhitzten Klebfläche emittiert wird. Wenn anhand der Intensität und/oder des Spektrums dieser Infrarotstrahlung festgestellt wird, dass die Klebfläche für die Aktivierung des Klebers optimale Solltemperatur erreicht hat, werden die Infrarotlampen 38 abgeschaltet, die Infrarotlampen werden nach oben zurückgefahren, und die gesamte Heizeinrichtung 30 wird wieder zur Seite geschwenkt.

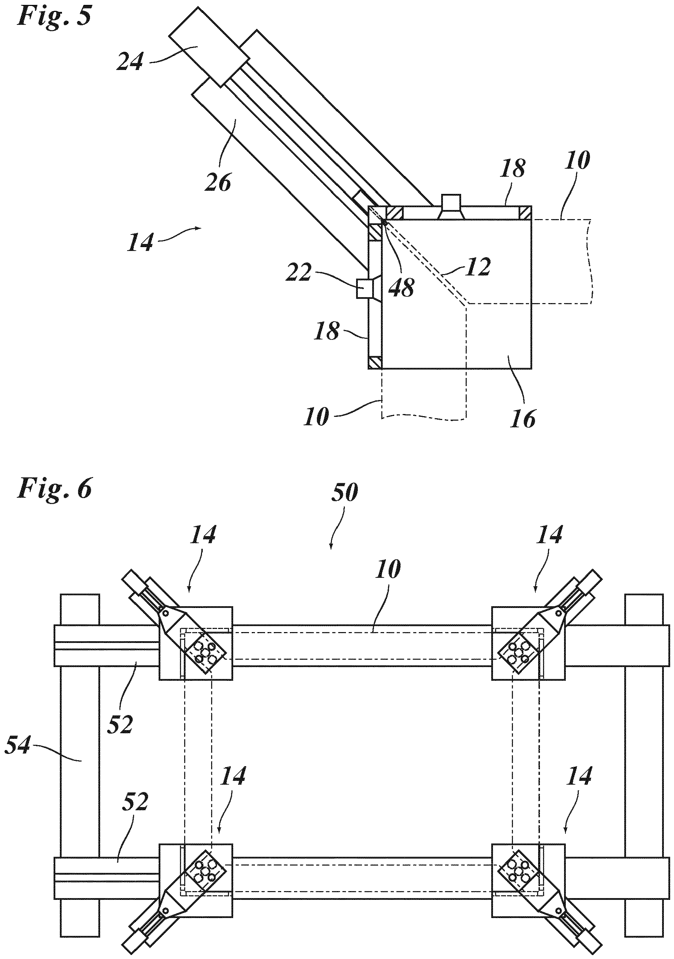

Die Backen 18 und Stützplatten 16 aller vier Eckelemente 14 der Vorrichtung werden mit Hilfe der Antriebe 24 gleichzeitig diagonal nach innen gefahren, so dass die Profilelemente 10 zusammengeschoben werden, bis ihre Gehrungsflächen 12 einander fast berühren, wie in Fig. 5 gezeigt ist. Zuvor wird jedoch ein Anschlagsschwert 48 ausgefahren, das diagonal in der Innenecke zwischen den beiden Backen 18 angeordnet ist. Dieses Anschlagsschwert bildet Anschläge für die Enden der Profilelemente 10, so dass deren Gehrungsflächen in einem definierten und für alle vier Ecken gleichen Abstand gehalten werden. Wenn dieser Zustand erreicht ist, werden die Anschlagsschwerter 48 zurückgezogen, und mit Hilfe der Antriebe 24 werden die Backen 18 an allen vier Ecken gleichmäßig weiter zusammengefahren, so dass die Klebflächen 12 der Profilelemente 10 fest gegeneinander gedrückt und miteinander verklebt werden.

Fig. 6 zeigt einen Grundriss der gesamten Vorrichtung mit den vier Eckelementen 14, die zusammen eine Presse 50 bilden. Je zwei dieser Eckelemente sind auf einer gemeinsamen Traverse 52 angeordnet. Die beiden Eckelemente 14, die in Fig. 6 auf der linken Seite gezeigt sind, sind mit Hilfe eines nicht gezeigten Antriebs synchron längs der jeweiligen Traverse 52 verfahrbar. Die Traversen 52 sind ihrerseits quer zu ihrer Längsrichtung auf Schienen 54 verfahrbar. Auf diese Weise können die Positionen der Eckelemente 14 an das jeweils gewünschte Format des aus den Profilelementen 10 zu bildenden Rahmens angepasst werden.

Es versteht sich, dass sämtliche der oben beschriebenen Arbeitsabläufe - mit Ausnahme des Einlegens der Profilelemente 10 in die Presse - automatisiert und durch eine geeignete elektronische Steuereinrichtung gesteuert sein können.

Im gezeigten Beispiel weist jedes Eckelement 14, einen Infrarotsensor 46, der in einer der beiden Backen 18 angeordnet ist. Wahlweise kann auch in jeder der beiden Backen ein Infrarotsensor angeordnet sein. Umgekehrt kann es u. U. genügen, wenn nur eines der vier Eckelemente 14 einen Infrarotsensor aufweist.

## Patentansprüche

1. Verfahren zum Verkleben von Profilelementen (10) mit Hilfe eines thermisch aktivierbaren Klebers, bei dem die Profilelemente (10) derart in eine Presse (50) eingelegt werden, dass ihre Klebflächen (12) einander in Abstand gegenüberliegen, eine Heizeinrichtung (30) in den Zwischenraum zwischen den Klebflächen (12) eingefahren wird, um den Kleber zu aktivieren, und Backen (18) der Presse derart gegeneinander bewegt werden, dass sie die Klebflächen (12) gegeneinanderpressen, **dadurch gekennzeichnet, dass** der Kleber mittels Strahlung aus einer Strahlungsquelle (38) der Heizeinrichtung (30) berührungslos erhitzt wird und dass die Temperatur der Klebflächen (12) berührungslos mit einem Infrarotsensor (46) gemessen wird.

2. Vorrichtung zum Verkleben von Profilelementen (10) mit Hilfe eines thermisch aktivierbaren Klebers, mit einer Presse (50), in die die Profilelemente (10) derart einlegbar sind, dass ihre Klebflächen (12) einander in Abstand gegenüberliegen, einer Heizeinrichtung (30), die so an der Presse angeordnet ist, dass sie in den Zwischenraum zwischen den Klebflächen (12) einfahren kann, um den Kleber zu aktivieren, und einem Antrieb (24), mit dem Backen (18) der Presse derart gegeneinander bewegbar sind, dass sie die Klebflächen (12) gegeneinanderpressen, **dadurch gekennzeichnet, dass** die Heizeinrichtung (30) eine Strahlungsquelle (38) zum berührungslosen Erhitzen des Klebers aufweist und dass an der Presse ein Infrarotsensor (46) zum berührungslosen Messen der Temperatur der Klebflächen (12) angeordnet ist.

3. Vorrichtung nach Anspruch 2, bei der die Strahlungsquelle mindestens eine Infrarotlampe (38) aufweist.

4. Vorrichtung nach Anspruch 2 oder 3, bei der die Heizeinrichtung (30) in einer zur Ebene der Profilelemente (10) senkrechten Richtung beweglich an der Presse (50) angeordnet ist.

5. Vorrichtung nach einem der Ansprüche 2 bis 4, bei der die Heizeinrichtung (30) schwenkbar an der Presse (50) angeordnet ist.

6. Vorrichtung nach einem der Ansprüche 2 bis 5, bei der die Presse vier Eckelemente (14) aufweist, die an den Ecken eines durch die Profilelemente (10) zu bildenden Rahmens angeordnet sind und jeweils zwei rechtwinklig zueinander angeordnete Backen (18) aufweisen.

7. Vorrichtung nach Anspruch 6, bei der der Infrarotsensor (46) in einer der Backen (18) angeordnet ist.

8. Vorrichtung nach Anspruch 6 oder 7, bei der in jede Backe (18) mindestens ein Saugkopf (22) integriert ist.

9. Vorrichtung nach einem der Ansprüche 6 bis 8, bei der jedes Eckelement (14) mit Hilfe des Antriebs (24) in einer Richtung diagonal zu den Ebenen der Backen (18) dieses Eckelements verschiebbar ist.

10. Vorrichtung nach Anspruch 9, bei der in der zwischen den Backen (18) eines Eckelements gebildeten Ecke ein ausfahrbares und zurückziehbares Anschlagelement (48) für auf Gehrung geschnittene Profilelemente angeordnet ist
